# EUROPEAN PATENT APPLICATION

(11) **EP 4 672 165 A1**
(43) Date of publication of application: **31.12.2025**
(21) Application number: 25156773.1
(22) Date of filing: 10.02.2025
(51) Int. Cl.: G06V 10/25, G06V 10/26

(54) **DETECTION METHOD AND APPARATUS, DEVICE AND STORAGE MEDIUM**

(30) Priority: 27.06.2024 CN 202410853185
(71) Applicant: Zhejiang Hengyi Petrochemical Co., Ltd., Zhejiang 311200 (CN); Haining Hengyi New Materials Co., Ltd., Jiaxing City, Zhejiang 314415 (CN)
(72) Inventor: LI, Dake, HANGZHOU, 311200 (CN); PENG, Xiantao, HANGZHOU, 311200 (CN); JIN, Junliang, HANGZHOU, 311200 (CN); WANG, Dandan, HANGZHOU, 311200 (CN); XU, Feng, HANGZHOU, 311200 (CN)
(74) Representative: Lavoix

(57) **Abstract**

Provided is a detection method, including: obtaining (S101) a prompt word used to indicate to find a yarn spindle; obtaining (S 102) multiple images of a trolley where the yarn spindle indicated by the prompt word is located, a first image among the multiple images including all yarn spindles carried by a first carrying area among two carrying areas included in the trolley, and a second image among the multiple images including all yarn spindles carried by a second carrying area among the two carrying areas; and inputting (S103) the multiple images and the prompt word into a target detection model to obtain a output image indicating a position of the yarn spindle; where the target detection model is able to identify yarn spindles in an input image based on the yarn spindle indicated by the prompt word to obtain an image indicating the position of the yarn spindle.

## Description

### TECHNICAL FIELD

The present disclosure relates to a field of data processing technology, and in particular to a detection method and apparatus, a device and a storage medium.

### BACKGROUND

In the processing link of yarn spindles, especially in the dyeing link, in order to further process (for example, dye, etc.) a yarn spindle with a specified process parameter, it is usually necessary to manually find the yarn spindle from the parking area (such as a warehouse). However, the method is obviously unable to quickly and accurately locate the yarn spindle, resulting in low processing efficiency.

### SUMMARY

The present disclosure provides a detection method and apparatus, a device and a storage medium, to solve or alleviate one or more technical problems in the related art.

In a first aspect, the present disclosure provides a detection method, applied to cloud, including:
obtaining a target prompt word, where the target prompt word is used to indicate to find a target yarn spindle;
obtaining a plurality of target images of a target trolley where the target yarn spindle indicated by the target prompt word is located; where the target trolley includes two carrying areas for carrying yarn spindles; at least one first image among the plurality of target images includes all yarn spindles carried by a first carrying area among the two carrying areas, and at least one second image among the plurality of target images includes all yarn spindles carried by a second carrying area among the two carrying areas; and
inputting the plurality of target images and the target prompt word into a target detection model to obtain a target output image indicating a position of the target yarn spindle; where the target detection model is able to identify yarn spindles in an input image based on the target yarn spindle indicated by the target prompt word to obtain an image indicating the position of the target yarn spindle.

In a second aspect, the present disclosure provides a detection apparatus, applied to cloud, including:
an information obtaining unit configured to obtain a target prompt word, where the target prompt word is used to indicate to find a target yarn spindle; and obtain a plurality of target images of a target trolley where the target yarn spindle indicated by the target prompt word is located; where the target trolley includes two carrying areas for carrying yarn spindles; at least one first image among the plurality of target images includes all yarn spindles carried by a first carrying area among the two carrying areas, and at least one second image among the plurality of target images includes all yarn spindles carried by a second carrying area among the two carrying areas; and
a detection unit configured to input the plurality of target images and the target prompt word into a target detection model to obtain a target output image indicating a position of the target yarn spindle; where the target detection model is able to identify yarn spindles in an input image based on the target yarn spindle indicated by the target prompt word to obtain an image indicating the position of the target yarn spindle.

In a third aspect, provided is an electronic device, including:
at least one processor; and
a memory connected in communication with the at least one processor;
where the memory stores an instruction executable by the at least one processor, and the instruction, when executed by the at least one processor, enables the at least one processor to execute the method of any embodiment of the present disclosure.

In a fourth aspect, provided is a non-transitory computer-readable storage medium storing a computer instruction thereon, and the computer instruction is used to cause a computer to execute the method of any embodiment of the present disclosure.

In a fifth aspect, provided is a computer program product including a computer program, and the computer program implements the method of any embodiment of the present disclosure, when executed by a processor.

In this way, the solution of the present disclosure can utilize the target prompt word and the target detection model to identify the yarn spindles in each obtained target image to obtain the image (such as the target output image) of the position of the target yarn spindle indicated by the target prompt word. Thus, compared with the existing manual finding method, the solution of the present disclosure can quickly and accurately locate the specific position of the target yarn spindle, and realize automatic positioning of the yarn spindle, so that the staff can quickly find the required yarn spindle according to the obtained position information, thereby saving a lot of manpower and time costs, and laying the foundation for subsequent normal operation of the yarn spindle processing technology.

It should be understood that the content described in this part is not intended to identify critical or essential features of embodiments of the present disclosure, nor is it used to limit the scope of the present disclosure. Other features of the present disclosure will be easily understood through the following description.

### BRIEF DESCRIPTION OF THE DRAWINGS

In the accompanying drawings, the same reference numbers represent the same or similar parts or elements throughout the accompanying drawings, unless otherwise specified. These accompanying drawings are not necessarily drawn to scale. It should be understood that these accompanying drawings only depict some embodiments provided according to the present disclosure, and should not be considered as limiting the scope of the present disclosure.
FIG. 1 is a first schematic flowchart of a detection method according to an embodiment of the present application;
FIG. 2 is a schematic diagram of a scene of a target trolley according to an embodiment of the present application;
FIG. 3(a) is a schematic diagram of a model structure of a target detection model according to an embodiment of the present application;
FIG. 3(b) is a schematic diagram of a segmentation effect of a segmentation network module in an example according to an embodiment of the present application;
FIG. 3(c) is a schematic diagram of the effect of an information mapping module in an example according to an embodiment of the present application;
FIG. 3(d) is a schematic diagram of the effect of an identification module in an example according to an embodiment of the present application;
FIG. 4(a) is a structural schematic diagram of a segmentation network module according to an embodiment of the present application;
FIG. 4(b) is a schematic diagram of segmenting a dot prompt image according to an embodiment of the present application;
FIG. 5 is a schematic diagram of a priori feature layer included in a segmentation network module according to an embodiment of the present application;
FIG. 6 is a schematic diagram of a similarity graph priori layer included in a semantic priori layer according to an embodiment of the present application;
FIG. 7 is a structural schematic diagram of a detection apparatus according to an embodiment of the present application; and
FIG. 8 is a block diagram of an electronic device for implementing the detection method of the embodiment of the present disclosure.

### DETAILED DESCRIPTION

The present disclosure will be described below in detail with reference to the accompanying drawings. The same reference numbers in the accompanying drawings represent elements with identical or similar functions. Although various aspects of the embodiments are shown in the accompanying drawings, the accompanying drawings are not necessarily drawn to scale unless specifically indicated.

In addition, in order to better illustrate the present disclosure, numerous specific details are given in the following specific implementations. Those having ordinary skill in the art should understand that the present disclosure may be performed without certain specific details. In some examples, methods, means, elements and circuits well known to those having ordinary skill in the art are not described in detail, in order to highlight the subject matter of the present disclosure.

The solution of the present disclosure provides a detection method to quickly locate a yarn spindle with a specified process parameter.

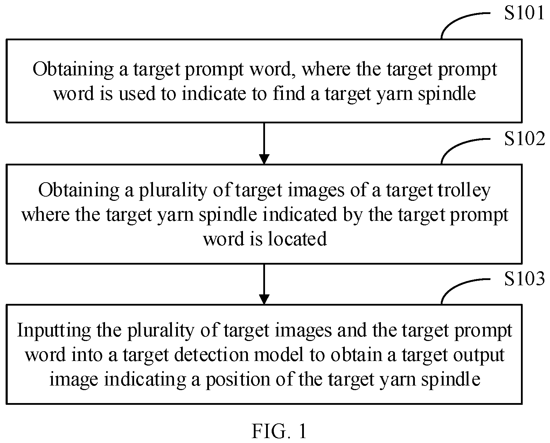

Specifically, FIG. 1 is a first schematic flowchart of a detection method according to an embodiment of the present application. The method is optionally applied in electronic devices, such as personal computers, servers, server clusters and other electronic devices.

Further, the method includes at least a part of the following content. As shown in FIG. 1, the detection method, applied to cloud, includes:
Step S101: obtaining a target prompt word, where the target prompt word is used to indicate to find a target yarn spindle.
Step S102: obtaining a plurality of target images of a target trolley where the target yarn spindle indicated by the target prompt word is located.

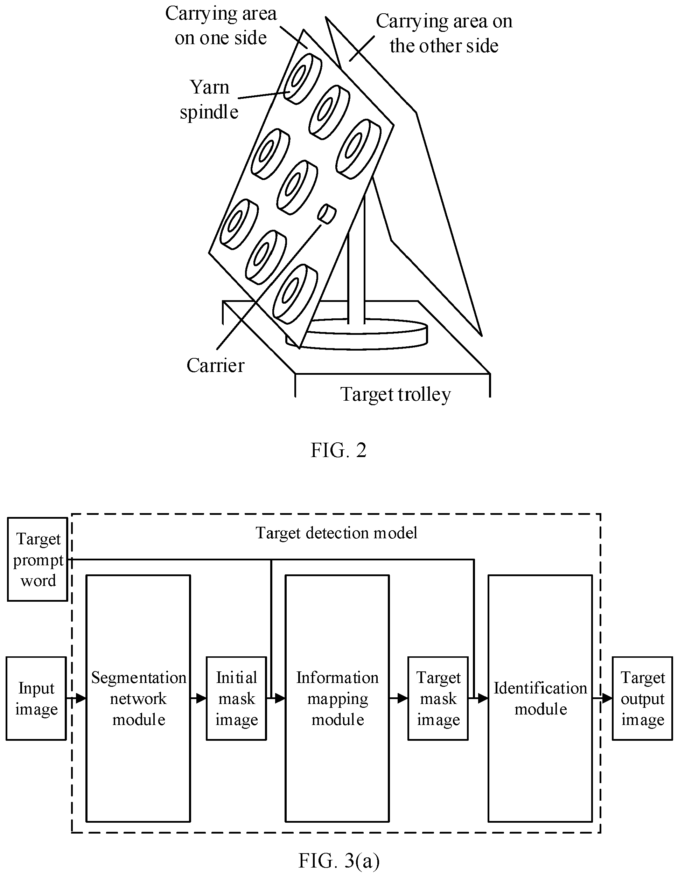

Here, the target trolley includes two carrying areas for carrying yarn spindles. For example, in an example, as shown in FIG. 2, carrying areas are provided on both sides of the target trolley, and each carrying area includes a carrier for carrying yarn spindles. At this time, each carrying area can carry 9 yarn spindles.

Further, at least one first image among the plurality of target images includes all yarn spindles carried by a first carrying area among the two carrying areas (for example, the first image includes all yarn spindles carried by the carrying area on one side as shown in FIG. 2), and at least one second image among the plurality of target images includes all yarn spindles carried by a second carrying area among the two carrying areas (for example, the second image includes all yarn spindles carried by the carrying area on the other side as shown in FIG. 2).

Step S103: inputting the plurality of target images and the target prompt word into a target detection model to obtain a target output image indicating a position of the target yarn spindle.

Here, the target detection model is able to identify yarn spindles in an input image based on the target yarn spindle indicated by the target prompt word to obtain an image indicating the position of the target yarn spindle.

It should be noted that the target output image can at least indicate the specific position of the target yarn spindle on the target trolley.

Further, in an example, the target prompt information may also be output when the target output image is output, and the target prompt information is used to prompt the specific position of the target trolley where the target yarn spindle is located (such as the parking area of the target trolley). At this time, the target output image can indicate the specific position of the target yarn spindle on the target trolley, and the target prompt information prompts the specific position of the target trolley, so that the staff can quickly and accurately locate the required yarn spindle based on the target output image and the target prompt information.

In this way, the solution of the present disclosure can utilize the target prompt word and the target detection model to identify the yarn spindles in each obtained target image to obtain the image (such as the target output image) of the position of the target yarn spindle indicated by the target prompt word. Thus, compared with the existing manual finding method, the solution of the present disclosure can quickly and accurately locate the specific position of the target yarn spindle, and realize automatic positioning of the yarn spindle, so that the staff can quickly find the required yarn spindle according to the obtained position information, thereby saving a lot of manpower and time costs, and laying the foundation for subsequent normal operation of the yarn spindle processing technology.

Further, in a specific example, the plurality of target images may be obtained in the following manner; specifically, the above-mentioned step of obtaining the plurality of target images of the target trolley where the target yarn spindle indicated by the target prompt word is located (for example, the above-mentioned step S102) specifically includes:
Step S102-1: determining identification information of the target yarn spindle indicated by the target prompt word.
Step S 102-2: determining identification information of the target trolley where the target yarn spindle is located based on the identification information of the target yarn spindle.

Here, in an actual scenario, a mapping relationship between yarn spindles and trolleys may be pre-stored, for example, the mapping relationship may record the identification information of the yarn spindles and the identification information of the trolleys.

Step S102-3: determining a parking area where the target trolley is located based on the identification information of the target trolley.

Step S102-4: screening out the plurality of target images from video data collected by an image acquisition device in the parking area where the target trolley is located.

It should be noted that, when the parking area where the target trolley is located is determined, video data which is collected by the image acquisition device located in the parking area and of which video tag information contains the identification information of the target trolley may be retrieved from video data stored in a database, and then the plurality of target images may be screened out from the retrieved video data.

Further, the video data may be obtained in the following manner to be stored in the database, specifically including: when detecting that the target trolley enters a start position of the parking area, starting a plurality of image acquisition devices located at the start position of the parking area to perform video acquisition on at least the carrying areas on both sides of the target trolley entering the parking area, to obtain the video data.

Further, in order to facilitate video management and data retrieval, the identification information of the target trolley entering the parking area may also be automatically identified, and the identified identification information of the target trolley is used as video tag information of the collected video data. Based on this, after determining the identification information of the target trolley, the video tag information corresponding to the identification information of the target trolley is obtained, and then the video data is retrieved based on the video tag information corresponding to the identification information of the target trolley, to screen out the plurality of target images from the retrieved video data.

In this way, the solution of the present disclosure can utilize the obtained identification information of the target trolley to quickly retrieve the video data related to the target trolley, and then screen out the plurality of target images from the retrieved video data, thus providing data support for subsequently locating the specific position of the target yarn spindle indicated by the target prompt word from the image quickly and automatically.

In a specific example of the solution of the present disclosure, as shown in FIG. 3(a), the target detection model includes at least a segmentation network module, an information mapping module and an identification module.

Specifically, in an example, the segmentation network module is configured to identify an area where each yarn spindle is located in the input image based on a preset yarn spindle prompt word, and use a mask plate to mask the area where each yarn spindle is located in the image to obtain an initial mask image of the input image; where the input image is one of the plurality of target images.

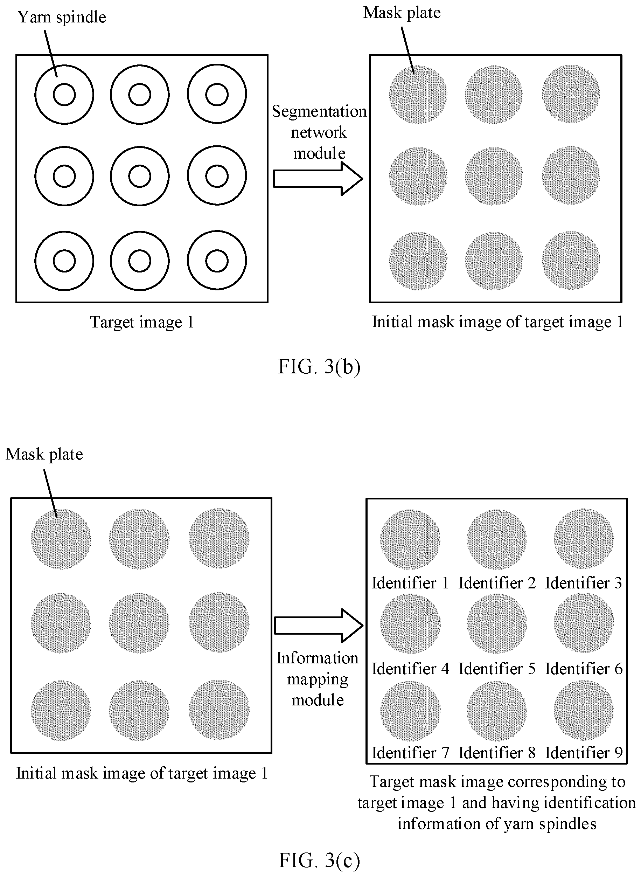

For example, as shown in FIG. 3(b), the target image 1 among the plurality of target images is input into the segmentation network module. At this time, the segmentation network module will identify the area where each yarn spindle is located in the target image 1 based on the preset yarn spindle prompt word, and use a mask plate to mask the area where each yarn spindle is located in the target image 1 to obtain an initial mask image of the target image 1, thus laying the foundation for subsequently locating the required target yarn spindle rapidly.

In an example, the information mapping module is configured to perform information mapping on the initial mask image based on the target prompt word to obtain a target mask image corresponding to the input image and having identification information of yarn spindles, where the target mask image corresponding to the input image and having identification information of yarn spindles is able to represent identification information of yarn spindles actually contained in the input image. For instance, in an example, the information mapping module is specifically configured to obtain identification information of yarn spindles to be carried by carriers in the target trolley based on the identification information of the target trolley, and map the identification information of yarn spindles to be carried by carriers in the target trolley onto mask plates at different positions in the initial mask image to obtain the target mask image corresponding to the input image and having the identification information of yarn spindles, where the identification information of the target trolley is obtained based on the identification information of the target yarn spindle indicated by the target prompt word. For example, the information mapping module obtains the identification information of the target trolley from the database based on the identification information of the target yarn spindle indicated by the target prompt word.

It should be pointed out that, in the example, the yarn spindles to be carried by carriers in the carrying area of the target trolley may refer to yarn spindles placed on the carriers according to a preset placement rule (or sequence), i.e., yarn spindles theoretically to be carried by the carriers. Based on this, after the identification information of the target trolley is obtained, the identification information of the yarn spindles theoretically carried by the carriers on the target trolley can be obtained, thus providing strong support for subsequent rapid detection or rapid location of the required yarn spindle.

Further, the "mapping" mentioned above may refer to adding the identification information of a yarn spindle to the carrier where the yarn spindle should theoretically be located based on the preset placement rule. Further, since each yarn spindle is masked by a mask plate in the mask image, the "mapping" mentioned above may further refer to adding the identification information of the yarn spindle to the mask plate on the carrier where the yarn spindle should theoretically be located based on the preset placement rule.

For example, continuing to take the initial mask image of the target image 1 for example, as shown in FIG. 3(c), after obtaining the identification information of the yarn spindles theoretically carried by the carriers of the target trolley, the information mapping module adds the identification information of the yarn spindles to the mask plates at the carriers where the yarn spindles should theoretically be located in the initial mask image of the target image 1 based on the preset placement rule, to obtain a target mask image corresponding to the target image 1 and having the identification information of the yarn spindles, thus laying the foundation for subsequently improving the efficiency of identifying the required target yarn spindle.

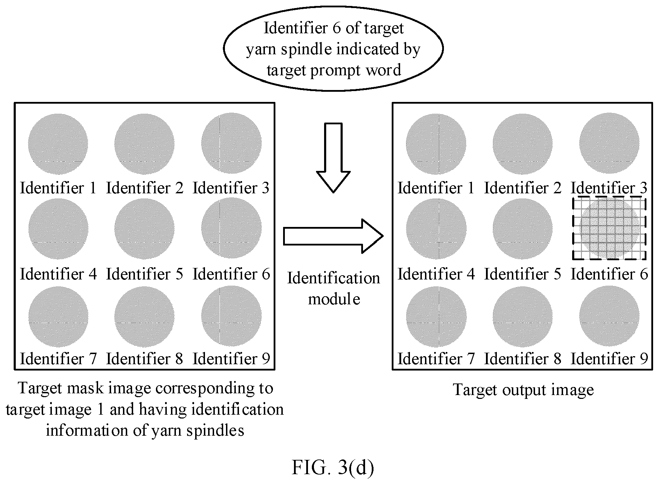

In an example, the identification module is configured to identify and label the target yarn spindle indicated by the target prompt word in the target mask image based on the identification information of the yarn spindles (that is, the identification information of each yarn spindle in the target mask image). For example, as shown in FIG. 3(d), an identifier 6 of the target yarn spindle indicated by the target prompt word is matched with the identification information of each yarn spindle in the target mask image of the target image 1, and the mask area corresponding to the identifier 6 is labeled in the target mask image, for example, the mask area corresponding to the identifier 6 is highlighted by a target frame, to obtain the target output image with the position of the target yarn spindle labeled.

In this way, the solution of the present disclosure can utilize the target prompt word and the target detection model to identify yarn spindles in each target image to obtain the target output image at the position of the target yarn spindle indicated by the target prompt word, so that the position information of the target yarn spindle can be quickly and accurately located, realizing automatic positioning of the yarn spindle, thereby saving a lot of manpower and time costs, and ensuring the production efficiency of the subsequent yarn spindle process.

Further, in an example, the segmentation network module may be a Segment Anything Model (SAM) based on priori information, or may be any other segmentation model with mask image generation capability, which is not limited in the solution of the present disclosure.

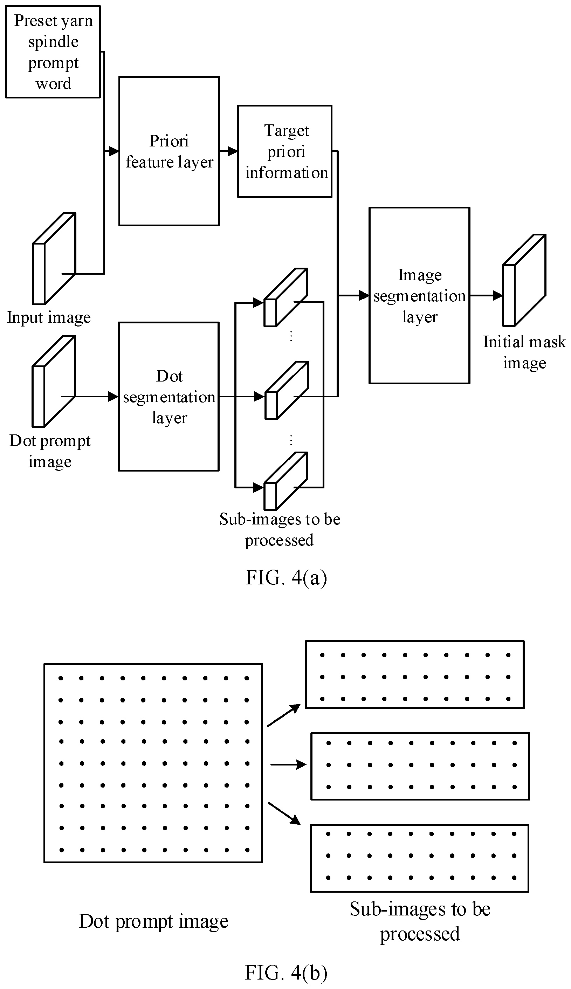

Further, in an example, as shown in FIG. 4(a), the segmentation network module includes at least a priori feature layer, a dot segmentation layer and an image segmentation layer.

Specifically, in an example, the priori feature layer is configured to obtain target priori information based on the preset yarn spindle prompt word and the input image. Here, the target priori information may be used to guide the image segmentation layer to identify the yarn spindles and segment areas where the yarn spindles are located, so as to enhance identification and segmentation capabilities of the image segmentation layer, and then generate a mask.

Further, in another example, the dot segmentation layer is configured to segment a dot prompt image to obtain a plurality of sub-images to be processed indicating positions of dots; where positions of dots in different sub-images to be processed among the plurality of sub-images to be processed do not overlap, and the dot prompt image is obtained by processing the input image using dots. For example, as shown in FIG. 4(b), firstly the input image such as the target image 1 shown in FIG. 3(b) is processed using dots to obtain a dot prompt image corresponding to the target image 1; and secondly, the obtained dot prompt image is segmented, for example, by row, to obtain a plurality of sub-images to be processed, and the dots between the sub-images to be processed do not overlap with each other, so as to facilitate batch image processing of the sub-images to be processed while effectively avoiding repeated identification, thereby laying a foundation for further improving the identification efficiency of yarn spindles.

Further, in yet another example, the image segmentation layer is configured to identify yarn spindles in each sub-image to be processed and segment areas where the yarn spindles are located based on the target priori information, and then use a mask plate to mask an area where each yarn spindle is located in the sub-image to be processed to obtain a sub-mask image of each sub-image to be processed; and further, obtain the initial mask image of the input image based on the sub-mask image of each sub-image to be processed, for example, by splicing the sub-mask images of the sub-images to be processed, after obtaining the sub-mask image of each sub-image to be processed.

In this way, the solution of the present disclosure can utilize the target priori information to enhance the identification and segmentation capabilities of the image segmentation layer, and at the same time, can also implement batch image processing based on the dot prompt image, thereby improving the segmentation efficiency, thus providing strong support for automatically obtaining the position information of the required target yarn spindle, and also providing strong support for subsequently improving the production efficiency of the yarn spindle processing technology.

In a specific example of the solution of the present disclosure, the priori feature layer includes at least a semantic priori layer and a similarity graph priori layer.

Here, in an example, the semantic priori layer is configured to obtain a semantic priori feature based on at least the yarn spindle feature corresponding to the preset yarn spindle prompt word. For example, in an example, the yarn spindle feature corresponding to the preset yarn spindle prompt word may be directly used as the semantic priori feature.

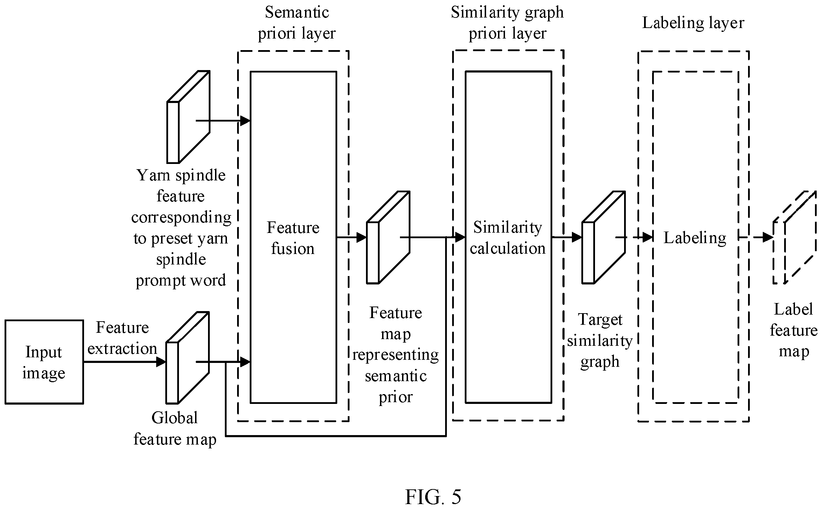

Further, in another example, the semantic priori layer may also obtain the semantic priori feature in the following manner; and specifically, as shown in FIG. 5, the semantic priori layer is specifically configured to fuse the yarn spindle feature corresponding to the preset yarn spindle prompt word with the image feature of the input image (such as a global feature map of the input image) to obtain a feature map for representing semantic prior (i.e., the semantic priori feature). For example, the yarn spindle feature corresponding to the preset yarn spindle prompt word is multiplied element by element with the image feature of the input image to obtain the feature map for representing semantic prior.

It should be noted that, in the example, if the dimension of the yarn spindle feature corresponding to the preset yarn spindle prompt word is inconsistent with the dimension of the image feature of the input image, it is necessary to upsample (such as bilinear interpolation processing) the yarn spindle feature corresponding to the preset yarn spindle prompt word so that the dimension of the processed yarn spindle feature is the same as the dimension of the image feature of the input image, and then perform feature fusion on the two features. In this way, the feature information of the obtained semantic priori feature is more abundant, providing strong support for further enhancing the identification and segmentation capabilities of the image segmentation layer.

Further, in yet another example, the similarity graph priori layer is configured to estimate an area where each yarn spindle is located in the input image based on a similarity between the yarn spindle feature corresponding to the preset yarn spindle prompt word and an image feature of the input image, to obtain a target similarity graph.

Here, it should be noted that the target priori information mentioned above includes the semantic priori feature and the target similarity graph.

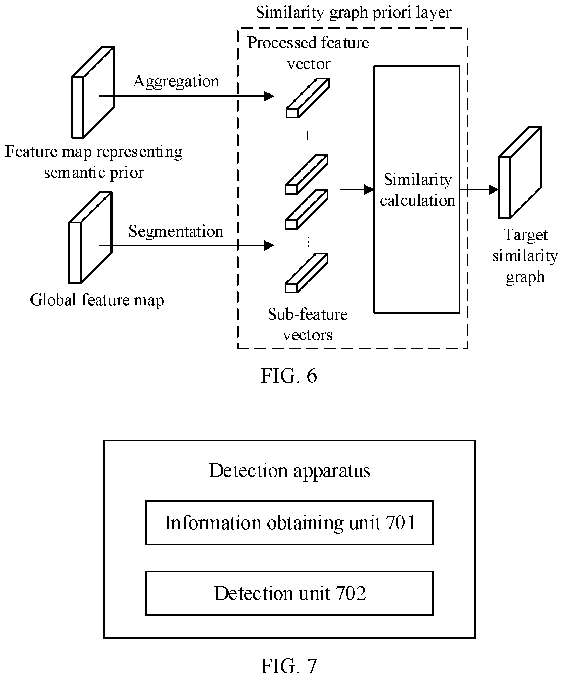

Further, in an example, the similarity graph priori layer may determine the target similarity graph in the following manner. Specifically, the similarity graph priori layer is specifically configured to: estimate the area where each yarn spindle is located in the input image based on the similarity between the obtained semantic priori feature and the image feature of the input image, to obtain the target similarity graph; for example, as shown in FIG. 5 and FIG. 6, specifically configured to:
aggregate the obtained semantic priori features to obtain an aggregated semantic priori feature, for example, sum (or average, etc.) pixel values of feature vectors representing semantic priori features by column to obtain an aggregated feature vector;
obtain a plurality of sub-feature vectors of the global feature map of the input image, for example, segment (such as divide by row) the feature vector representing the global feature map to obtain a plurality of sub-feature vectors in an example, where the dimension of each sub-feature vector obtained is the same as the dimension of the aggregated feature vector, thereby facilitating calculation of the similarity between them; and
obtain the similarity between each of the plurality of sub-feature vectors and the aggregated feature vector, and obtain the target similarity graph based on the similarity.

In this way, the areas where the yarn spindles are located in the input image can be accurately determined, laying a foundation for subsequently identifying and separating the yarn spindles in the image accurately and obtaining the mask image.

Further, in an example, the priori feature layer may further include a feature enhancement layer. For example, the obtained target similarity graph is input into the feature enhancement layer to perform feature enhancement on the target similarity graph to obtain the target similarity graph after feature enhancement. At this time, the image segmentation layer may specifically perform identification and segmentation based on the semantic priori feature and the target similarity graph after feature enhancement, thus further improving the accuracy of image identification and segmentation.

Alternatively, in another example, the priori feature layer may further include a labeling layer. For example, as shown in FIG. 5, the obtained target similarity graph (or the target similarity graph after feature enhancement) is input into the labeling layer to label the input target similarity graph to obtain a label feature map; and at this time, the target priori information may specifically include the semantic priori feature and the label feature map.

Here, in the label feature map (for example, marked with "0" and " 1"), if the value of an area is 1, the area is a positive area, that is, there is a yarn spindle or part of a yarn spindle; otherwise, the area is a negative area. In this way, it is convenient for the image segmentation layer to focus on segmenting the positive area and ignore the negative area, thus further enhancing the identification and segmentation capabilities for yarn spindles, and then it is convenient to more accurately identify and separate the yarn spindles in the image while effectively improving the identification and segmentation efficiency.

It should be pointed out that the priori feature layer mentioned above may include the feature enhancement layer or the labeling layer, or include the feature enhancement layer and the labeling layer, etc., or may also include other processing layers for improving image identification and segmentation capabilities, which may be set according to actual requirements in practical applications, and is not specifically limited in the solution of the present disclosure.

In this way, the solution of the present disclosure can utilize the semantic priori feature and the target similarity graph in the target priori information to enhance the image identification and segmentation capabilities of the image segmentation layer, so that the image segmentation layer can better focus on the identification and segmentation of the yarn spindles in the image, thus effectively improving the identification accuracy and identification efficiency.

The solution of the present disclosure further provides a detection apparatus, applied to cloud. As shown in FIG. 7, the detection apparatus includes:
an information obtaining unit 701 configured to obtain a target prompt word, where the target prompt word is used to indicate to find a target yarn spindle; and obtain a plurality of target images of a target trolley where the target yarn spindle indicated by the target prompt word is located; where the target trolley includes two carrying areas for carrying yarn spindles; at least one first image among the plurality of target images includes all yarn spindles carried by a first carrying area among the two carrying areas, and at least one second image among the plurality of target images includes all yarn spindles carried by a second carrying area among the two carrying areas; and
a detection unit 702 configured to input the plurality of target images and the target prompt word into a target detection model to obtain a target output image indicating a position of the target yarn spindle; where the target detection model is able to identify yarn spindles in an input image based on the target yarn spindle indicated by the target prompt word to obtain an image indicating the position of the target yarn spindle.

In a specific example of the solution of the present disclosure, the information obtaining unit is specifically configured to:
determine identification information of the target yarn spindle indicated by the target prompt word;
determine identification information of the target trolley where the target yarn spindle is located based on the identification information of the target yarn spindle;
determine a parking area where the target trolley is located based on the identification information of the target trolley; and
screen out the plurality of target images from video data collected by an image acquisition device in the parking area where the target trolley is located.

In a specific example of the solution of the present disclosure, the target detection model includes at least a segmentation network module, an information mapping module and an identification module;
the segmentation network module is configured to identify an area where each yarn spindle is located in the input image based on a preset yarn spindle prompt word, and use a mask plate to mask the area where each yarn spindle is located in the image to obtain an initial mask image of the input image; where the input image is one of the plurality of target images;
the information mapping module is configured to perform information mapping on the initial mask image based on the target prompt word to obtain a target mask image corresponding to the input image and having identification information of yarn spindles, where the target mask image corresponding to the input image and having identification information of yarn spindles is able to represent identification information of yarn spindles actually contained in the input image; and
the identification module is configured to identify and label the target yarn spindle indicated by the target prompt word in the target mask image based on the identification information of yarn spindles, to obtain the target output image.

In a specific example of the solution of the present disclosure, the information mapping module is specifically configured to obtain identification information of yarn spindles to be carried by carriers in the target trolley based on the identification information of the target trolley, and map the identification information of yarn spindles to be carried by carriers in the target trolley onto mask plates at different positions in the initial mask image to obtain the target mask image corresponding to the input image and having the identification information of yarn spindles, where the identification information of the target trolley is obtained based on the identification information of the target yarn spindle indicated by the target prompt word.

In a specific example of the solution of the present disclosure, the segmentation network module includes at least a priori feature layer, a dot segmentation layer and an image segmentation layer;
the priori feature layer is configured to obtain target priori information based on the preset yarn spindle prompt word and the input image;
the dot segmentation layer is configured to segment a dot prompt image to obtain a plurality of sub-images to be processed indicating positions of dots; where positions of dots in different sub-images to be processed among the plurality of sub-images to be processed do not overlap, and the dot prompt image is obtained by processing the input image using dots; and
the image segmentation layer is configured to identify yarn spindles in each sub-image to be processed based on the target priori information, and use a mask plate to mask an area where each yarn spindle is located in the sub-image to be processed to obtain a sub-mask image of each sub-image to be processed; and obtain the initial mask image of the input image based on the sub-mask image of each sub-image to be processed.

In a specific example of the solution of the present disclosure, the priori feature layer includes at least a semantic priori layer and a similarity graph priori layer;
the semantic priori layer is configured to obtain a semantic priori feature based on at least a yarn spindle feature corresponding to the preset yarn spindle prompt word; and
the similarity graph priori layer is configured to estimate the area where each yarn spindle is located in the input image based on a similarity between the yarn spindle feature corresponding to the preset yarn spindle prompt word and an image feature of the input image, to obtain a target similarity graph;
where the target priori information includes the semantic priori feature and the target similarity graph.

In a specific example of the solution of the present disclosure, the semantic priori layer is specifically configured to fuse the yarn spindle feature corresponding to the preset yarn spindle prompt word with the image feature of the input image to obtain the semantic priori feature.

In a specific example of the solution of the present disclosure, the similarity graph priori layer is specifically configured to:
estimate the area where each yarn spindle is located in the input image based on a similarity between the obtained semantic priori feature and the image feature of the input image, to obtain the target similarity graph.

For the description of specific functions and examples of the units of the apparatus of the embodiment of the present disclosure, reference may be made to the relevant description of the corresponding steps in the above-mentioned method embodiments, and details are not repeated here.

In the technical solution of the present disclosure, the acquisition, storage and application of the user's personal information involved are in compliance with relevant laws and regulations, and do not violate public order and good customs.

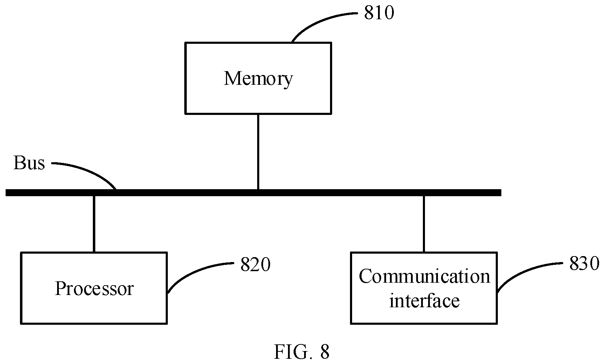

FIG. 8 is a structural block diagram of an electronic device according to an embodiment of the present disclosure. As shown in FIG. 8, the electronic device includes: a memory 810 and a processor 820, and the memory 810 stores a computer program that can run on the processor 820. There may be one or more memories 810 and processors 820. The memory 810 may store one or more computer programs, and the one or more computer programs cause the electronic device to perform the method provided in the above method embodiment, when executed by the electronic device. The electronic device may also include: a communication interface 830 configured to communicate with an external device for data interactive transmission.

If the memory 810, the processor 820 and the communication interface 830 are implemented independently, the memory 810, the processor 820 and the communication interface 830 may be connected to each other and complete communication with each other via a bus. The bus may be an Industry Standard Architecture (ISA) bus, a Peripheral Component Interconnect (PCI) bus, or an Extended Industry Standard Architecture (EISA) bus, etc. The bus may be divided into an address bus, a data bus, and/or a control bus, etc. For ease of representation, the bus is represented by only one thick line in FIG. 8, but the thick line does not represent only one bus or only one type of bus.

Optionally, in a specific implementation, if the memory 810, the processor 820 and the communication interface 830 are integrated on one chip, the memory 810, the processor 820 and the communication interface 830 may communicate with each other via an internal interface.

It should be understood that the above-mentioned processor may be a Central Processing Unit (CPU) or other general-purpose processor, a Digital Signal Processor (DSP), an Application Specific Integrated Circuit (ASIC), a Field Programmable Gate Array (FPGA) or other programmable logic device, a discrete gate or transistor logic device, and/or a discrete hardware component, etc. The general-purpose processor may be a microprocessor or any conventional processor, etc. It is worth noting that the processor may be a processor that supports the Advanced RISC Machines (ARM) architecture.

Further, optionally, the above-mentioned memory may include a read-only memory and a random access memory, and may also include a non-volatile random access memory. The memory may be a volatile memory or a non-volatile memory, or may include both a volatile memory and a non-volatile memory. Here, the non-volatile memory may include a Read-Only Memory (ROM), a Programmable ROM (PROM), an Erasable PROM (EPROM), an Electrically EPROM (EEPROM) or a flash memory. The volatile memory may include a Random Access Memory (RAM), which acts as an external cache. By way of illustration and not limitation, many forms of RAMs are available, for example, a Static RAM (SRAM), a Dynamic Random Access Memory (DRAM), a Synchronous DRAM (SDRAM), a Double Data Rate SDRAM (DDR SDRAM), an Enhanced SDRAM (ESDRAM), a Synchlink DRAM (SLDRAM) and a Direct RAMBUS RAM (DR RAM).

The above embodiments may be implemented in whole or in part by software, hardware, firmware or any combination thereof. When implemented by software, they may be implemented in the form of a computer program product in whole or in part. The computer program product includes one or more computer instructions. When the computer instructions are loaded and executed on a computer, the processes or functions described in embodiments of the present disclosure are generated in whole or in part. The computer may be a general-purpose computer, a special-purpose computer, a computer network, or other programmable device. The computer instructions may be stored in a computer readable storage medium or transmitted from a computer readable storage medium to another computer readable storage medium. For example, the computer instructions may be transmitted from a website, computer, server or data center to another website, computer, server or data center in a wired (e.g., coaxial cable, optical fiber, Digital Subscriber Line (DSL)) or wireless (e.g., infrared, Bluetooth, and/or microwave, etc.) way. The computer readable storage medium may be any available medium that can be accessed by a computer, or a data storage device such as server or data center that is integrated with one or more available media. The available media may be magnetic media (for example, floppy disk, hard disk, magnetic tape), optical media (for example, Digital Versatile Disc (DVD)), or semiconductor media (for example, Solid State Disk (SSD)), etc. It is worth noting that the computer readable storage medium mentioned in the present disclosure may be a non-volatile storage medium, in other words, may be a non-transitory storage medium.

Those having ordinary skill in the art can understand that all or some of the steps for implementing the above embodiments may be completed by hardware, or may be completed by instructing related hardware through a program. The program may be stored in a computer readable storage medium. The above-mentioned storage medium may be a read-only memory, a magnetic disk or an optical disk, etc.

In the description of the embodiments of the present disclosure, the description with reference to the terms "an embodiment", "some embodiments", "example", "specific example" or "some examples", etc. means that specific features, structures, materials or characteristics described in conjunction with the embodiment or example are included in at least one embodiment or example of the present disclosure. Moreover, the specific features, structures, materials or characteristics described may be combined in a suitable manner in any one or more embodiments or examples. In addition, those skilled in the art can integrate and combine different embodiments or examples and features of different embodiments or examples described in this specification without conflicting with each other.

In the description of the embodiments of the present disclosure, "/" represents or, unless otherwise specified. For example, A/B may represent A or B. The term "and/or" herein only describes an association relation of associated objects, which indicates that there may be three kinds of relations, for example, A and/or B may indicate that only A exists, or both A and B exist, or only B exists.

In the description of the embodiments of the present disclosure, the terms "first" and "second" are only for purpose of description, and cannot be construed to indicate or imply the relative importance or implicitly point out the quantity of technical features indicated. Therefore, the feature defined with "first" or "second" may explicitly or implicitly include one or more features. In the description of the embodiments of the present disclosure, "a plurality of" means two or more, unless otherwise specified.

The above descriptions are only exemplary embodiments of the present disclosure and not intended to limit the present disclosure. Any modifications, equivalent replacements, improvements and others made within the principle of the present disclosure shall be contained in the protection scope of the present disclosure.

## Claims

1. A detection method, applied to cloud, comprising:
obtaining (S101) a target prompt word, wherein the target prompt word is used to indicate to find a target yarn spindle;
obtaining (S102) a plurality of target images of a target trolley where the target yarn spindle indicated by the target prompt word is located; wherein the target trolley comprises two carrying areas for carrying yarn spindles; at least one first image among the plurality of target images comprises all yarn spindles carried by a first carrying area among the two carrying areas, and at least one second image among the plurality of target images comprises all yarn spindles carried by a second carrying area among the two carrying areas; and
inputting (S103) the plurality of target images and the target prompt word into a target detection model to obtain a target output image indicating a position of the target yarn spindle; wherein the target detection model is able to identify yarn spindles in an input image based on the target yarn spindle indicated by the target prompt word to obtain an image indicating the position of the target yarn spindle.

2. The method of claim 1, wherein obtaining (S102) the plurality of target images of the target trolley where the target yarn spindle indicated by the target prompt word is located, comprises:
determining identification information of the target yarn spindle indicated by the target prompt word;
determining identification information of the target trolley where the target yarn spindle is located based on the identification information of the target yarn spindle;
determining a parking area where the target trolley is located based on the identification information of the target trolley; and
screening out the plurality of target images from video data collected by an image acquisition device in the parking area where the target trolley is located.

3. The method of claim 1 or 2, wherein the target detection model comprises at least a segmentation network module, an information mapping module and an identification module;
the segmentation network module is configured to identify an area where each yarn spindle is located in the input image based on a preset yarn spindle prompt word, and use a mask plate to mask the area where each yarn spindle is located in the image to obtain an initial mask image of the input image; wherein the input image is one of the plurality of target images;
the information mapping module is configured to perform information mapping on the initial mask image based on the target prompt word to obtain a target mask image corresponding to the input image and having identification information of yarn spindles, wherein the target mask image corresponding to the input image and having identification information of yarn spindles is able to represent identification information of yarn spindles actually contained in the input image; and
the identification module is configured to identify and label the target yarn spindle indicated by the target prompt word in the target mask image based on the identification information of yarn spindles, to obtain the target output image.

4. The method of claim 3, wherein the information mapping module is specifically configured to obtain identification information of yarn spindles to be carried by carriers in the target trolley based on the identification information of the target trolley, and map the identification information of yarn spindles to be carried by carriers in the target trolley onto mask plates at different positions in the initial mask image to obtain the target mask image corresponding to the input image and having the identification information of yarn spindles, wherein the identification information of the target trolley is obtained based on the identification information of the target yarn spindle indicated by the target prompt word.

5. The method of claim 3, wherein the segmentation network module comprises at least a priori feature layer, a dot segmentation layer and an image segmentation layer;
the priori feature layer is configured to obtain target priori information based on the preset yarn spindle prompt word and the input image;
the dot segmentation layer is configured to segment a dot prompt image to obtain a plurality of sub-images to be processed indicating positions of dots; wherein positions of dots in different sub-images to be processed among the plurality of sub-images to be processed do not overlap, and the dot prompt image is obtained by processing the input image using dots; and
the image segmentation layer is configured to identify yarn spindles in each sub-image to be processed based on the target priori information, and use a mask plate to mask an area where each yarn spindle is located in the sub-image to be processed to obtain a sub-mask image of each sub-image to be processed; and obtain the initial mask image of the input image based on the sub-mask image of each sub-image to be processed.

6. The method of claim 5, wherein the priori feature layer comprises at least a semantic priori layer and a similarity graph priori layer;
the semantic priori layer is configured to obtain a semantic priori feature based on at least a yarn spindle feature corresponding to the preset yarn spindle prompt word; and
the similarity graph priori layer is configured to estimate the area where each yarn spindle is located in the input image based on a similarity between the yarn spindle feature corresponding to the preset yarn spindle prompt word and an image feature of the input image, to obtain a target similarity graph;
wherein the target priori information comprises the semantic priori feature and the target similarity graph;
preferably, the semantic priori layer is specifically configured to fuse the yarn spindle feature corresponding to the preset yarn spindle prompt word with the image feature of the input image to obtain the semantic priori feature;
preferably, the similarity graph priori layer is specifically configured to: estimate the area where each yarn spindle is located in the input image based on a similarity between the obtained semantic priori feature and the image feature of the input image, to obtain the target similarity graph.

7. A detection apparatus, applied to cloud, comprising:
an information obtaining unit (701) configured to obtain a target prompt word, wherein the target prompt word is used to indicate to find a target yarn spindle; and obtain a plurality of target images of a target trolley where the target yarn spindle indicated by the target prompt word is located; wherein the target trolley comprises two carrying areas for carrying yarn spindles; at least one first image among the plurality of target images comprises all yarn spindles carried by a first carrying area among the two carrying areas, and at least one second image among the plurality of target images comprises all yarn spindles carried by a second carrying area among the two carrying areas; and
a detection unit (702) configured to input the plurality of target images and the target prompt word into a target detection model to obtain a target output image indicating a position of the target yarn spindle; wherein the target detection model is able to identify yarn spindles in an input image based on the target yarn spindle indicated by the target prompt word to obtain an image indicating the position of the target yarn spindle.

8. The apparatus of claim 7, wherein the information obtaining unit (701) is specifically configured to:
determine identification information of the target yarn spindle indicated by the target prompt word;
determine identification information of the target trolley where the target yarn spindle is located based on the identification information of the target yarn spindle;
determine a parking area where the target trolley is located based on the identification information of the target trolley; and
screen out the plurality of target images from video data collected by an image acquisition device in the parking area where the target trolley is located.

9. The apparatus of claim 7 or 8, wherein the target detection model comprises at least a segmentation network module, an information mapping module and an identification module;
the segmentation network module is configured to identify an area where each yarn spindle is located in the input image based on a preset yarn spindle prompt word, and use a mask plate to mask the area where each yarn spindle is located in the image to obtain an initial mask image of the input image; wherein the input image is one of the plurality of target images;
the information mapping module is configured to perform information mapping on the initial mask image based on the target prompt word to obtain a target mask image corresponding to the input image and having identification information of yarn spindles, wherein the target mask image corresponding to the input image and having identification information of yarn spindles is able to represent identification information of yarn spindles actually contained in the input image; and
the identification module is configured to identify and label the target yarn spindle indicated by the target prompt word in the target mask image based on the identification information of yarn spindles, to obtain the target output image.

10. The apparatus of claim 9, wherein the information mapping module is specifically configured to obtain identification information of yarn spindles to be carried by carriers in the target trolley based on the identification information of the target trolley, and map the identification information of yarn spindles to be carried by carriers in the target trolley onto mask plates at different positions in the initial mask image to obtain the target mask image corresponding to the input image and having the identification information of yarn spindles, wherein the identification information of the target trolley is obtained based on the identification information of the target yarn spindle indicated by the target prompt word.

11. The apparatus of claim 9, wherein the segmentation network module comprises at least a priori feature layer, a dot segmentation layer and an image segmentation layer;
the priori feature layer is configured to obtain target priori information based on the preset yarn spindle prompt word and the input image;
the dot segmentation layer is configured to segment a dot prompt image to obtain a plurality of sub-images to be processed indicating positions of dots; wherein positions of dots in different sub-images to be processed among the plurality of sub-images to be processed do not overlap, and the dot prompt image is obtained by processing the input image using dots; and
the image segmentation layer is configured to identify yarn spindles in each sub-image to be processed based on the target priori information, and use a mask plate to mask an area where each yarn spindle is located in the sub-image to be processed to obtain a sub-mask image of each sub-image to be processed; and obtain the initial mask image of the input image based on the sub-mask image of each sub-image to be processed.

12. The apparatus of claim 11, wherein the priori feature layer comprises at least a semantic priori layer and a similarity graph priori layer;
the semantic priori layer is configured to obtain a semantic priori feature based on at least a yarn spindle feature corresponding to the preset yarn spindle prompt word; and
the similarity graph priori layer is configured to estimate the area where each yarn spindle is located in the input image based on a similarity between the yarn spindle feature corresponding to the preset yarn spindle prompt word and an image feature of the input image, to obtain a target similarity graph;
wherein the target priori information comprises the semantic priori feature and the target similarity graph;
preferably, the semantic priori layer is specifically configured to fuse the yarn spindle feature corresponding to the preset yarn spindle prompt word with the image feature of the input image to obtain the semantic priori feature;
preferably, the similarity graph priori layer is specifically configured to: estimate the area where each yarn spindle is located in the input image based on a similarity between the obtained semantic priori feature and the image feature of the input image, to obtain the target similarity graph.

13. A non-transitory computer-readable storage medium storing a computer instruction thereon, wherein the computer instruction is used to cause a computer to execute the method of any one of claims 1 to 6.

14. A computer program product comprising a computer program, wherein the computer program implements the method of any one of claims 1 to 6, when executed by a processor.
